# EUROPEAN PATENT APPLICATION

(11) **EP 3 958 240 A1**
(43) Date of publication of application: **23.02.2022**
(21) Application number: 20191566.7
(22) Date of filing: 18.08.2020
(51) Int. Cl.: G09B 9/04

(54) **MODULAR DRIVING SIMULATOR PLATFORM**

(71) Applicant: aSR advanced Simulated Reality GmbH, 73728 Esslingen (DE)
(72) Inventor: Gümbel, Christoph, 71679 Asperg (DE); Strobel, Marc, 70173 Stuttgart (DE); Gimpel, Simon, 70173 Stuttgart (DE)
(74) Representative: Meyer zu Bexten, Elmar

(57) **Abstract**

Modular driving simulator characterized in
a driver front module (1) comprising pedalry and steering,
seat modules (3), each seat module (3) comprising seating,
uniform mounting points, preferably concealed by covering (4), interconnecting the modules (1, 2, 3),
basic panels (6) cladding each corner of the simulator, and
expansion panels (7) cladding the simulator laterally.

## Description

### Technical Field

The invention relates to the products and process as per the first portion of the independent claims.

### Background Art

Professional driving simulators are used in the car industry to design and evaluate new vehicles or new advanced driver assistance systems by way of a technique known as driver-in-the-loop (DiL) simulation. NPL1 provides an example of a pertinent application.

PTL1 discloses a modular driving simulator.

### Summary of invention

The invention is based on the notion of a modular platform that accommodates a wide variety of sizes, body styles, and left-hand or right-hand drive configurations, as is defined by the second portion of

### Claim 1.

### Advantageous effect of invention

When used for automotive development, an embodiment of the invention closes the figurative gap between simulation and real prototype studies, thus greatly improving maturity in an early phase of the development cycle. Hence, the invention serves to accelerate the development process and reduce physical prototypes whilst still permitting a realistic experience of vehicle and driver assistance system models as well as code and functions for different software packages. When used in the context of DiL simulation, a simulator as per the invention allows a developer to execute maneuvers without complex virtual driver models and record driver data to reproduce the scenarios thus simulated, nonetheless providing a safe environment even when investigating critical driving maneuvers "close to the limit".

Specific features set forth in the dependent claims offer additional advantages. For instance, a simulator as per Claim 7 can be split and repositioned for easy transport using its integrated roller system while a simulator as per Claim 11 or Claim 12 caters for a variety of ergonomic environments ranging from a sports car to SUV.

### Brief description of drawings

Figure 1 is an exploded top view of a four-seated simulator.
Figure 2 is a top view of the assembled four-seated simulator.
Figure 3 is a top view of a two-seated simulator.
Figure 4 is a top view of a single-seated simulator.
Figure 5 is a top view of a modular textile covering.
Figure 6 is a cross section of the covering along plane A of Figure 5.
Figure 7 is a cross section of the covering along plane B of Figure 5.
Figure 8 is a cross section of the covering along plane C of Figure 5.
Figure 9 is a bottom view of a seat module.
Figure 10 is a cross section of the seat module along plane A of Figure 9.
Figure 11 is a top view of a driver front and seat module.
Figure 12 is a structural detail A of Figure 11.
Figure 13 and Figure 14 are top views of an alternative driver front and seat module showing a fold-up desk.
Figure 15 is a front view of a plug board.
Figure 16 is a partial side view of a seat module with seat adjustment.

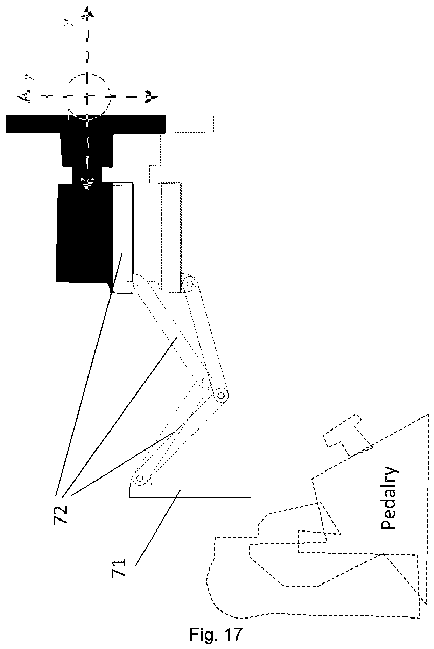

Figure 17 is a partial side view of a driver front module with steering adjustment.

### Description of embodiments

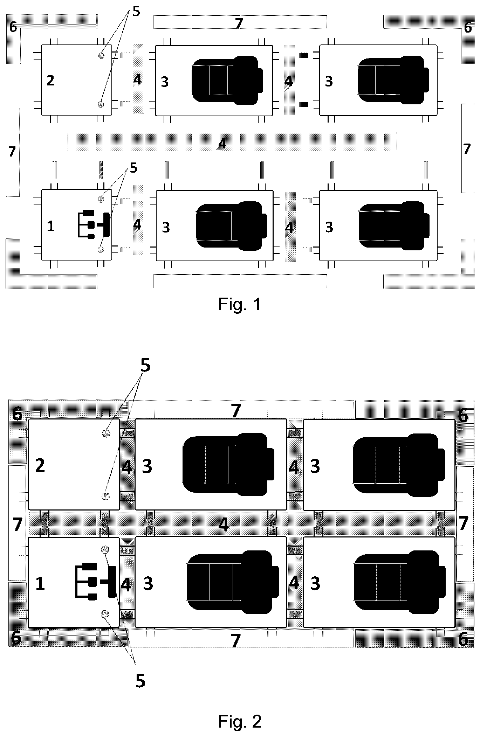

Figure 1 and Figure 2 depict a driving simulator composed of a driver front module (1) comprising pedalry and steering, a passenger front module (2) alongside the driver front module (1), and four seat modules (3), with two beams (5) protruding vertically from each the driver (1) and passenger front modules (2) for carrying a console. For structural integrity, two uniform mounting points concealed by covering (4) mutually connect each two adjacent modules (1, 2, 3). Basic panels clad each of the four corners of the simulator while four additional panels (7) clad the apparatus fore and aft for simulator expansion.

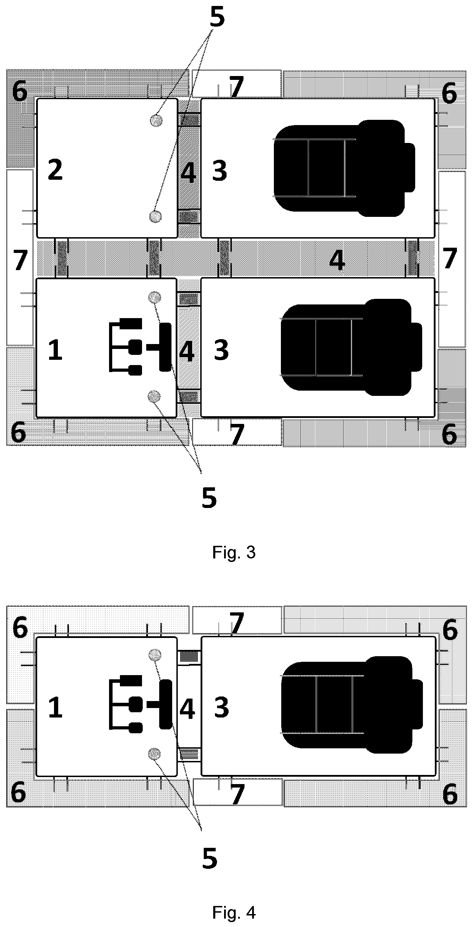

Figure 3 and Figure 4 illustrate the simulator's modular nature by means of a two-seated and single-seated configuration. As may be gathered from these drawings, all variants are composed of uniform modules, albeit in alternate arrangements.

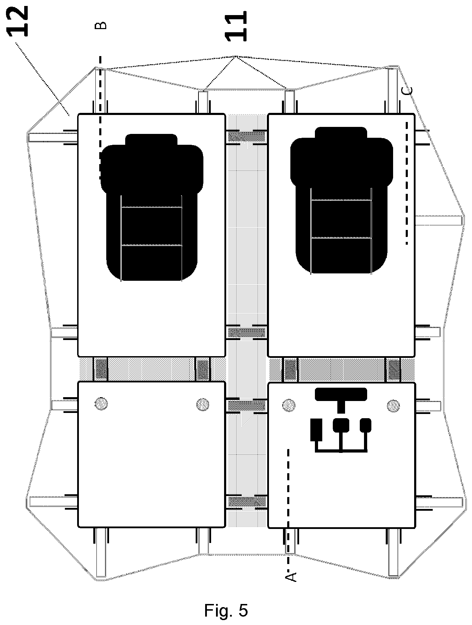

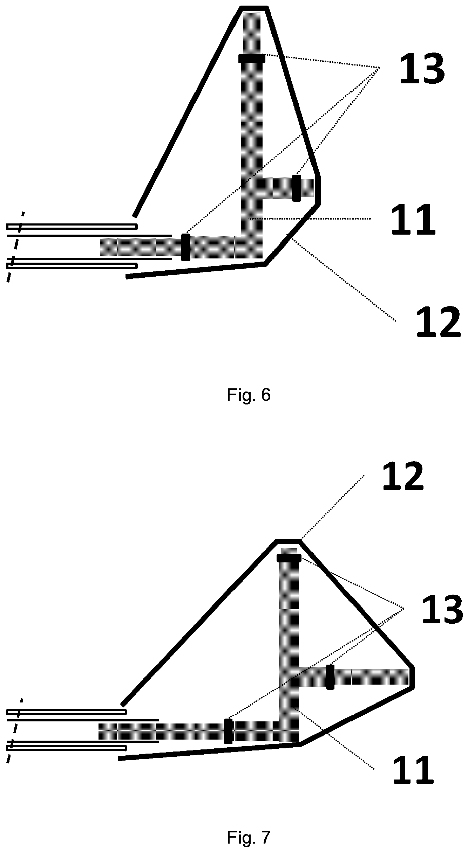

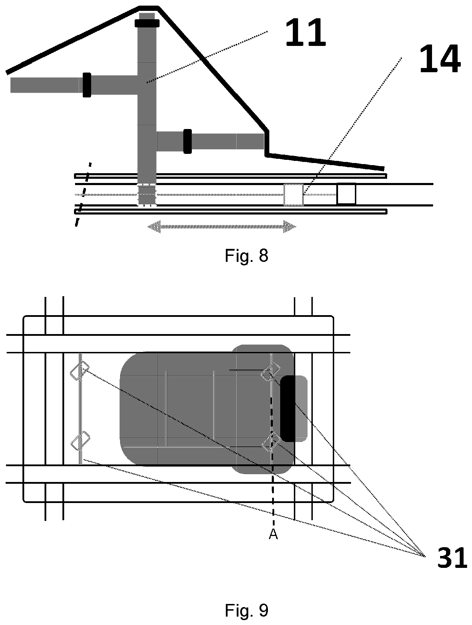

Figure 5 through Figure 8 show an optional fabric (12) stretched around frame mountings (11) protruding peripherally from the modules (1, 2, 3). Telescoping sleeves (13) incorporated in the mountings (11) are provided to shape this fabric (12) as desired. As is best seen in Figure 8, a rail (14) extending circumferentially about the modules (1, 2, 3) bears slidable connectors that hold the mountings (11), thus providing additional flexibility.

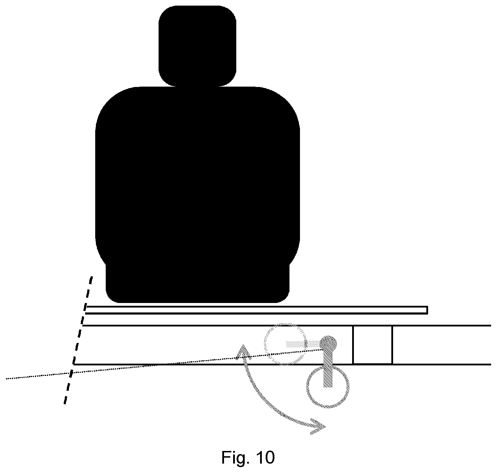

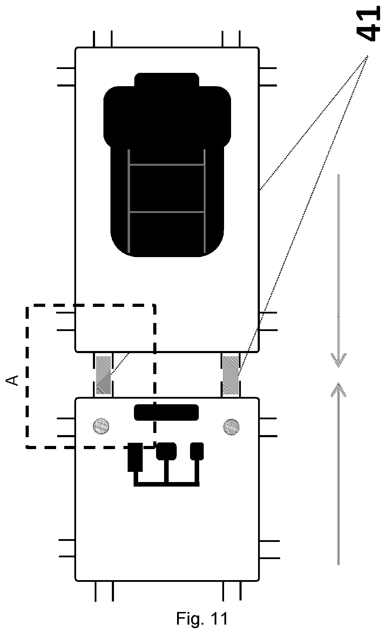

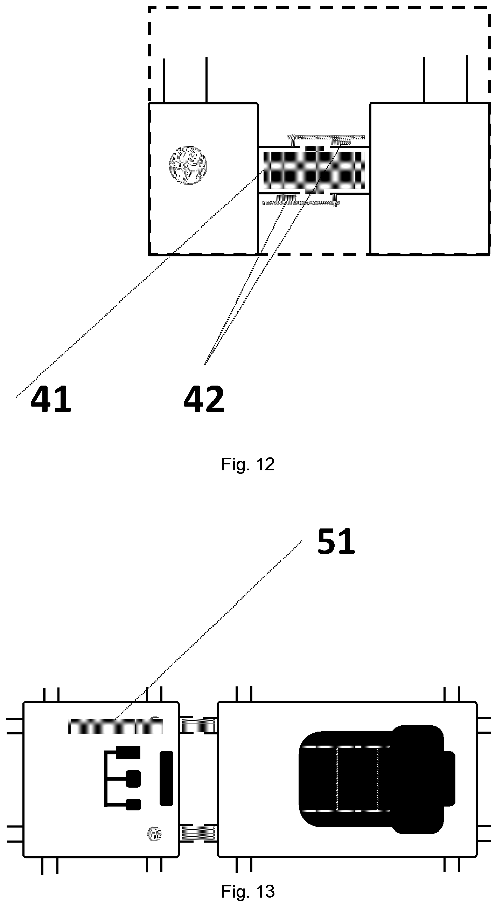

For ease of haulage, electromotively or pneumatically retractable transport rollers may be installed underneath the modules (1, 2, 3), as are shown in Figure 9 and Figure 10. Once properly arranged, connecting sleeves (41) having quick-release fasteners (42) can be employed to secure the modules (1, 2, 3) at their mounting points. Figure 11 and Figure 12 elucidate this option.

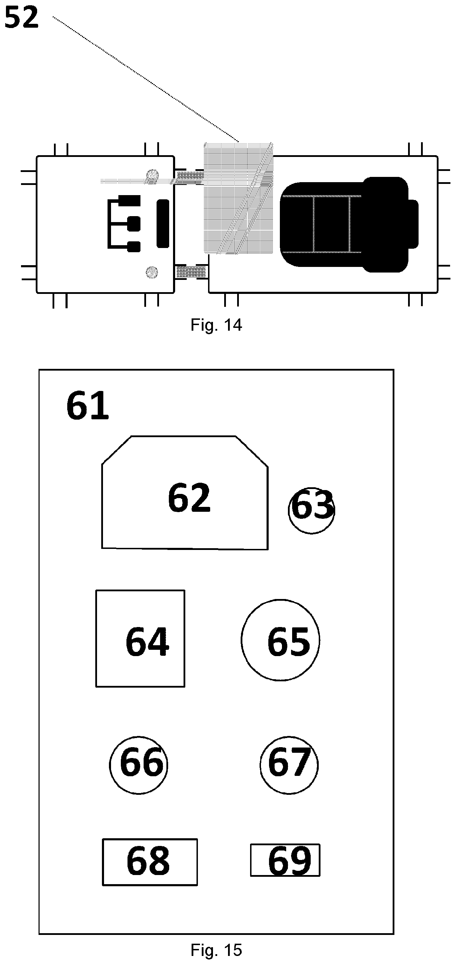

An ergonomic work environment may be provided by means of a fold-up desk (51, 52) that, whilst in its stowed position (51), is secured within the driver front module (see Figure 13). When unfolded to its set-up position (52 - Figure 14), the desk (51, 52) projects rearward beyond the driver front module (1) over the adjacent seat module (3).

Figure 15 exemplifies the layout of the plug boards (61) located at the mounting points for power and signal transmission. In the configuration depicted, each board (61) features an appliance connector (62), headphone jack (63), Ethernet hub (64), multipolar plugs for seat adjustment (65), lighting (66), and transportation (67), as well as a digital port (68) and universal serial bus for virtual reality headgear (69).

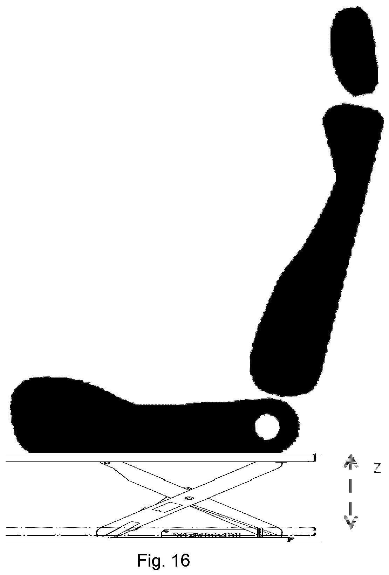

In driving simulator design, the variability of seat ergonomics - such as in terms of seating and steering positions, angles, and gender-specific anatomy - poses a challenge. As is shown in Figure 16, scissors lifts are affixed to each seat module (3) underneath its seating to alleviate this issue. Furthermore, in the front module (1), a carrier plate (71) is fixed relative to the pedalry, to which plate (71) the steering is linked through a triple-jointed or otherwise articulated supporting arm (72).

In a preferred embodiment, the driver front module (1) contains high-performant simulator hardware on which a co-simulation of the specific vehicle - including its various electronic control units (ECUs) - and the vehicle's environment is executed in real time while the user operates the pedalry and steering, receiving at least visual feedback via his console.

### Industrial applicability

The invention is applicable, inter alia, throughout the automotive and entertainment industries.

### Reference signs list

- 1: Driver front module
- 2: Passenger front module
- 3: Seat module
- 4: Covering for mounting points
- 5: Vertical beam for console
- 6: Basic cladding panel
- 7: Cladding panel for simulator expansion
- 11: Frame mounting for textile cover
- 12: Stretch fabric with mounting points
- 13: Telescopic sleeve
- 14: Adjusting rail with connector for frame mounting
- 31: Electrically extendable transport roller
- 41: Connecting sleeve
- 42: Quick-release fastener
- 51: Fold-up desk in stowed position
- 52: Fold-up desk in set-up position
- 61: Plug board
- 62: Appliance connector
- 63: 3.5 mm headphone jack
- 64: Ethernet hub
- 65: Multipolar plug for seat adjustment
- 66: Multipolar plug for lighting
- 67: Multipolar plug for transportation
- 68: Digital port for virtual reality headgear
- 69: Universal serial bus for virtual reality headgear
- 71: Carrier plate
- 72: Triple-jointed supporting arm

### Citation list

The following documents are cited hereinbefore.

### Patent literature

PTL1: DE 102017201354 B (BAYERISCHE MOTOREN WERKE AG [DE]) 02.08.2018

### Non-patent literature

NPL1: FILEV, Dimitar, et al. Real-time driving behavior identification based on driver-in-the-loop vehicle dynamics and control. 2009 IEEE International Conference on Systems, Man and Cybernetics. 2009, p.2020-2025.

## Claims

1. Modular driving simulator **characterized in**
a driver front module (1) comprising pedalry and steering,
seat modules (3), each seat module (3) comprising seating,
uniform mounting points, preferably concealed by covering (4), interconnecting the modules (1, 2, 3),
basic panels (6) cladding each corner of the simulator, and
expansion panels (7) cladding the simulator laterally.

2. Simulator as per Claim 1, **characterized in**
a passenger front module (2) alongside the driver front module (1), the expansion panels (7) preferably further cladding the simulator fore and aft.

3. Simulator as per Claim 1 or Claim 2, **characterized in**
beams (5) protruding vertically at least from the driver front module (1) for carrying a console.

4. Simulator as per any of the preceding claims, **characterized in** frame mountings (11) protruding peripherally from the modules (1, 2, 3) and a fabric (12) stretching around the mountings (11).

5. Simulator as per Claim 4, **characterized in**
telescoping sleeves (13) incorporated in the mountings (11) for shaping the fabric (12) as desired.

6. Simulator as per Claim 4 or Claim 5, **characterized in**
a rail (14) bearing slidable connectors holding the frame mountings (11), the rail (14) extending circumferentially about the modules (1, 2, 3).

7. Simulator as per any of the preceding claims, **characterized in** transport rollers (31) retractable, preferably electromotively, underneath the modules (1, 2, 3).

8. Simulator as per any of the preceding claims, **characterized in** connecting sleeves (41) having quick-release fasteners (42) for securing the modules (1, 2, 3) at the mounting points.

9. Simulator as per any of the preceding claims, **characterized in** a fold-up desk (51, 52), the desk (51, 52) having a stowed position (51) within the driver front module (1) and a set-up position (52) wherein the desk (51, 52) projects rearward beyond the driver front module (1).

10. Simulator as per any of the preceding claims, **characterized in** plug boards (61) located at the mounting points, the boards (61) exhibiting means (62-69) for power and signal transmission such as an appliance connector (62), headphone jack (63), Ethernet hub (64), multipolar plugs for seat adjustment (65), lighting (66), and transportation (67), and a digital port (68) and universal serial bus for virtual reality headgear (69).

11. Simulator as per any of the preceding claims, **characterized in** scissors lifts affixed to the seat modules (3) underneath the seating.

12. Simulator as per any of the preceding claims, **characterized in** a carrier plate (71) fixed within the driver front module (1) relative to the pedalry and
an articulated supporting arm (72), preferably triple-jointed, linking the steering to the carrier plate (71).

13. Method of using a simulator as per any of the preceding claims, **characterized in that**
the pedalry and steering are adjusted by multiple electronic control units to constitute a specific vehicle.

14. Computer program comprising instructions which, when the program is executed by a computer, cause the computer to carry out the method of Claim 13.

15. Data carrier signal carrying the program of Claim 14.
